# EUROPEAN PATENT APPLICATION

(11) **EP 3 692 791 A1**
(43) Date of publication of application: **12.08.2020**
(21) Application number: 20155733.7
(22) Date of filing: 05.02.2020
(51) Int. Cl.: A01M 7/00, B05B 9/08, B05B 3/02, B05B 3/10, B05B 7/00, B05B 7/24

(54) **PORTABLE LIQUID COLD FOGGER**

(30) Priority: 05.02.2019 US 201962801446 P
(71) Applicant: The Fountainhead Group, Inc., New York Mills, New York 13417 (US)
(72) Inventor: PUTRELLO, Andrew C., Utica, NY 13501 (US)
(74) Representative: DREISS Patentanwälte PartG mbB

(57) **Abstract**

An electrically powered portable liquid cold fogger that includes a main housing and that when used in conjunction with an electric motor, a self-feeding tentacle pumping spinning element, a tentacle feed tube, air screw, and air flow focusing shroud, is able to pump, fog, and dispense, low and high viscosity fluid in the forward direction.

## Description

### Cross-Reference to Related Application

The present application relates and claims priority to United States Provisional Application No. 62/801,446, filed February 5, 2019, the entire contents of which are hereby incorporated by reference.

### Field of the Invention

The present invention relates to a portable liquid cold fogger, and more particularly, to a portable liquid cold fogger dispenser that uses a self-feeding tentacle pumping spinning element and an airscrew to create, direct, and dispense liquid cold fog using minimal energy.

### BACKGROUND OF THE INVENTION

Liquid foggers have been used in many different environments and can be particularly useful when spraying pesticides and special effects during stage productions. One of the most common ways to create liquid fog is to heat the liquid to extremely high temperatures using electrical energy or burning gases such as propane. The liquid is often treated with glycerin to enhance the fogging properties of the liquid. Another common method to create liquid cold fog is to generate high pressure within a fluid filled container and then release the pressurized fluid through a small opening. The pressure is commonly generated using manual or electric pumps. Both the heated and high-pressure methods for generating liquid fog require tremendous amounts of electrical, thermal, or human supplied energy to function. In addition, extremely hot sections of heated liquid foggers are dangerous and could cause injury or fire. Spraying liquid through small openings can cause clogging, especially when spraying high viscosity fluids.

There are also methods to spray fluid that use a rotating mechanism that do not require high pressure but have the disadvantage of spraying in 360 degrees. For many applications such as spraying paint, stain, and pesticides, spraying a 360-degree pattern would cause the user to be sprayed by the back spray. This is particularly troublesome when spraying pesticides. When spraying pesticides, the user is often required to wear protective clothing to prevent the back spray of the spinning mechanisms from covering their bodies. In addition, the spinning mechanisms require outside pumping mechanisms that are not dissimilar to the pressure generating mechanisms that are commonly used in sprayers that force liquid through small openings. Many of the pumping and dispensing mechanisms currently used are restricted to low viscosity fluids, generate excessive friction, are mechanically complex, rigid, bulky, noisy, difficult to clean, require excessive electrical or thermal power, are difficult and expensive to manufacture, susceptible to clogging, and cannot pump over great distances. Most fluid dispensers include a dip tube that links the pump to the fluid and dispenser opening. It would be advantageous to have a dip tube that could pump.

Ever since liquid cold foggers have been used, there has been a need for one invention that would provide a low power, quiet, easy to clean, portable liquid cold fogger, that uses a self-feeding dip tube, a self-feeding tentacle pumping spinning element, and directional air screw elements, to create, move, and dispense liquid cold fog in a forward direction without the need to generate high pressure or heat. The present invention addresses the aforementioned problems by using a structural design that is aimed at minimizing the negative effects thus increasing the likelihood that the individual will use the portable liquid cold fogger and realize it's benefits.

### SUMMARY OF THE INVENTION

In accordance with the present invention, there is provided an electrically powered portable liquid cold fogger that includes a main housing and that when used in conjunction with an electric motor, a self-feeding tentacle pumping spinning element, a tentacle feed tube shroud, and an air screw, is able to pump low and high viscosity fluid, create liquid cold fog, and dispense the liquid cold fog in the forward direction.

It would be advantageous to provide a cold fogger that pumps its own fluid.

It would also be advantageous to provide a cold fogger that could move fluid without high pressure.

It would further be advantageous to provide a cold fogger that could atomize without high pressure.

It would also be advantageous to provide a cold fogger that could dispense both low and high viscosity fluids without clogging.

It would further be advantageous to provide a cold fogger that redirects back spray forward using an airscrew.

It would also be advantageous to provide a cold fogger that could create liquid cold fog using low power.

It would further be advantageous to provide a dip tube that could pump.

It would also be advantageous to provide a cold fogger that did not require a glycerin-based liquid.

It would further be advantageous to provide a cold fogger that did not require a heated section.

It would also be advantageous to provide a cold fogger that could vary liquid fog particle size.

It would further be advantageous to provide a cold fogger that operated quietly.

It would also be advantageous to provide a cold fogger that used a shroud that could enhance air flow.

It would also be advantageous to provide a cold fogger that used an air screw to enhance air flow.

In an embodiment, a liquid cold fogger is provided that comprises a main housing adapted to contain liquid therein; a motor adapted to produce rotational motion; a power source operably coupled to the motor; a bundle of tentacles, each tentacle having first and second ends in fluid communication with the liquid; a tentacle feed tube in which the bundle of tentacles are housed; and a tentacle pumping spinning element operably connected to the motor for rotation about an axis, wherein the first ends of the tentacles are attached to the tentacle pumping spinning element.

In an aspect, the liquid cold fogger further comprises a shroud composed of inner and outer shroud members that are movable relative to one another between first and second positions, wherein the tentacle pumping spinning element is positioned within the shroud when the inner and outer shroud members are in their first position and is positioned exteriorly of the shroud when the inner and outer shroud members are in their second position.

In an aspect, the liquid cold fogger further comprises a spring detent operably extending between the inner shroud and the outer shroud and fixing the two in either of their first and second positions.

In an aspect, the tentacle pumping spinning element comprises a bulbous body and includes a plurality of bristles extending radially outwardly therefrom.

In an aspect, the liquid cold fogger further comprises an air screw positioned adjacent the tentacle pumping spinning element and operably adapted to push air across the tentacle spinning element.

In an aspect, the tentacle feed tube is a solid tube that attaches to the main housing via a feed tube connector that fluidly connects the tentacle feed tube to the main housing such that liquid in the housing can flow into the feed tube.

In an aspect, the tentacle feed tube includes a plurality of apertures formed therethrough and the tentacle feed tube is positioned within the main housing, wherein the fluid in the main housing can flow into the feed tube through the apertures.

### BRIEF DESCRIPTION OF THE DRAWINGS

A complete understanding of the present invention may be obtained by reference to the accompanying drawings, when considered in conjunction with the subsequent, detailed description, in which:
Figure 1 is a cross-sectional, side elevation view of a portable liquid cold fogger, in accordance with an embodiment; and
Figure 2 is a cross-sectional, side elevation view of a portable liquid cold fogger, in accordance with an embodiment.

For purposes of clarity and brevity, like elements and components will bear the same designations and numbering throughout the Figures.

### DESCRIPTION OF THE PREFERRED EMBODIMENT

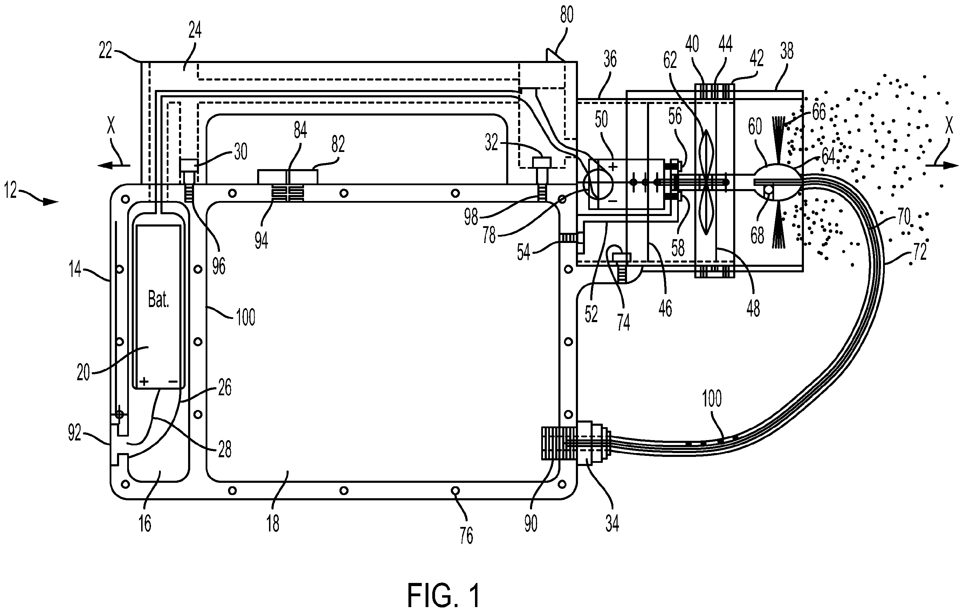

Referring to FIGS. 1 to 2 each element of the portable liquid cold fogger 12 is briefly described. A full description of the function and operation of the portable liquid cold fogger 12 will follow.

The portable liquid cold fogger 12 of the invention includes: a main housing 14, fluid compartment 18, battery compartment 16, handle 22, battery 20, hollow wire network 24, negative wire lead 26, positive wire lead 28, handle mounting screw 1 30, handle mounting screw 2 32, handle mounting hole 1 96, handle mounting hole 2 98, tentacle feed tube connector 34, inner shroud 36, outer shroud 38, outer shroud mounting screw 1 40, outer shroud mounting screw 2 42, spring loaded detent 44, inner shroud locking channel 1 46, inner shroud locking channel 2 48, motor 50, motor mount 52, motor mount mounting screw 54, motor mounting screw 1 56, motor mounting screw 2 58, tentacle pumping spinning element 60, bristles 66, air screw 62, tentacle set screw 68, tentacles 70, tentacle feed tube 72 shroud mounting screw 74, housing cover mounting screw holes 76, shroud air hole 78, switch 80, filler cap 82, filler cap air hole 84, tentacle feed tube hole 86, external fluid container link 88, threaded mounting hole 90, and battery charger connector 92.

In the embodiment of Figure 1, the handle 22 of cold fogger 12 extends along the top of main housing 14 and battery compartment 16 which are situated adjacent one another and separated by an interior wall 100. Inner shroud 36 extends forwardly from the forward facing surfaces of main housing 14 and handle 22, and outer shroud 38 is positioned forwardly in relation to inner shroud 36 for selective movement between first and second terminal positions with spring detent 44 locking in one of those two positions until forcibly moved to the other position; when in the first position the tentacle pumping spinning element 60 is positioned within the confines of the shroud 38 and while in the second (or rearward) position, tentacle pumping spinning element 60 is positioned in an at least partially unconfined position relative to outer shroud 38.

The battery 20 is housed within battery compartment 16 and contains the wire leads 26, 28 that extend from the battery through a channel formed in handle 22 and, in the embodiment of Figure 1, attach to motor 50 which is positioned within the confines of inner shroud 38. When actuated, motor 50 will cause a drive shaft to rotate about its longitudinal axis X-X. Tentacle pumping spinning element 60 is attached to the drive shaft such that it too will rotate about axis X-X upon actuation of motor 50. Bristles 66 extend radially outwardly from tentacle pumping spinning element 60 and will, thus, spin about axis X-X as well. Furthermore, air screw 62 is also attached to the motor's drive shaft and thus rotates about axis X-X as well.

In the embodiment of Figure 1, tentacle feed tube 72 attaches at a first end to tentacle feed tube connector 34 which is positioned on the exterior of the forward wall of main housing 18 and includes a fluid pathway extending therethrough and into feed tube 72 such that the liquid stored in main compartment 18 can flow into feed tube 72. The bunch of tentacles 70 are bound at their first ends and affixed to tentacle feed tube connector 34 and run through feed tube 72 before being fastened at their second ends to the tip of spinning element 60. As spinning element 60 rotates about axis X-X, it causes tentacles 70 to rotate as well, as described in more detail below.

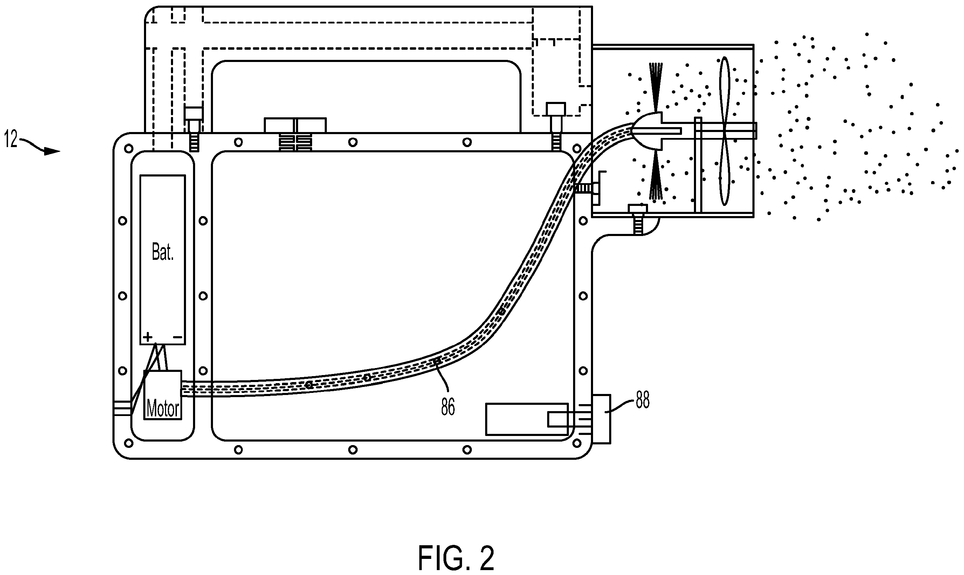

The embodiment of Figure 2 includes most of the same elements as the embodiment of Figure 1, except feed tub 72 and tentacles 70 extend within main housing 18 instead of exteriorly of main housing 70. In the embodiment of Figure 2, motor 50 is positioned in battery compartment 16 and the first ends of tentacles 70 are attached to the motor's drive shaft, thereby imparting rotational motion to the tentacles 70 and feed tube 72 when the motor is actuated. The second end of tentacles 70 and feed tube 72 terminate at the end of the spinning element 60 which is positioned within the confines of shroud 36. As tentacle feed tube 72 is within main compartment 18 it contains a plurality of apertures or perforations 86 that permit the liquid contained within main housing 18 to enter the feed tube. With this configuration, an external fluid source may be attached to main housing 18, for example, using the connection point where tentacle feed tube connector 34 is located in the embodiment of Figure 1.

In operation and referring to FIGS 1 to 2, the user must first remove the filler cap 82 from filler cap mounting hole 94, fill the fluid compartment 18 with the desired fluid, and then resecure the filler cap 82. Before applying electrical power, the outer shroud 38 is slid towards the housing where it locks into place as the spring-loaded detent 44 drops into the inner shroud locking channel 1 46 of inner shroud 36. This action reveals the solid portion of the tentacle pumping spinning element 60. When power is applied through switch 80, the electric motor 50 shaft rotates causing the tentacle pumping spinning element 60 to rotate at high rpm.

The flexible tentacles 70 made from metal, plastic or other suitable materials, are coaxially mounted within the tentacle pumping spinning element 60 and easily rotate within the tentacle feed tube 72 that is connected to the fluid container through the tentacle feed tube connector 34. The tentacles 70 occupy a very small volume of the tentacle feed tube 72 thus minimizing friction. It is possible to pump high viscosity liquids with as few as 3 tentacles 70 of 8 thousandths of an inch in diameter each within a 1/4" inside diameter tentacle feed tube 72. The tentacles 70 move freely within the tentacle feed tube 72 with little resistance. The flexible nature of this pumping method allows for bending around curves and causes the fluid to rise in the tentacle feed tube 72 delivering the fluid to the tip of the solid portion of the tentacle pumping spinning element 60 through the tentacle feed tube 72.

Once the fluid is introduced to the tip of the solid portion of the tentacle pumping spinning element 60 it is pulled up rapidly to the center outside perimeter of the tentacle pumping spinning element 60 due to a strong low pressure gradient created by the change in diameter from the tip of the solid portion of the tentacle pumping spinning element 60 to the center of the solid portion of the tentacle pumping spinning element 60 during rapid rotation. As the fluid rapidly climbs to the larger outside center perimeter of the solid portion of the tentacle pumping spinning element 60 and simultaneously up to the bristles 66 the fluid is converted into liquid fog that radiates out in a 360 degrees pattern.

The liquid fog is pushed in a forward direction by the air screw 62. The air screw 62 can push the liquid fog great distances in the forward direction. The air screw 62 can be of variable pitches, shapes, and sizes, to optimize airflow. The speed of the motor 50 can be varied to change the liquid fog density and liquid particle size.

The tentacles 70 of the tentacle pumping spinning element 60 can be of different shapes and sizes to accommodate a variety of liquids from low to high viscosity. The solid portion of the tentacle pumping spinning element 60 can have different surfaces and textures to accommodate different fluids. The tentacles 70 can be as long as necessary to move fluids over great distances and are able to bend around obstacles. The shape of the tentacles 70 can be of numerous varieties that include straight or slightly twisted to enhance fluid movement. The number of tentacles 70 can be varied to accommodate different viscosities and diameters of the tentacle feed tube 72.

As the motor 50 rotates the tentacle pumping spinning element 60 the tentacles 70 are flung to the inside perimeter of the tentacle feed tube 72 by centripetal acceleration thus generating a pressure differential inside the tentacle feed tube 72. The tentacles 70 are also tighter upon rotation at close proximity to the motor 50. This causes the diameter of the tentacles 70 bundle to vary over distance also resulting in a pressure differential and results in a conveyor like fluid transfer up the tentacle feed tube 72.

The tentacles 70 can also be made from individually twisted wires, and or, include small bulbous tentacles 100 that include geometric shapes not dissimilar to the solid portion of the tentacle pumping spinning element 60 to further enhance fluid movement. The solid portion of the tentacle pumping spinning element 60 creates a tremendous low pressure gradient due to its varied diameter and rotation. This enables the tentacle pumping spinning element 60 to very efficiently draw fluid up that is delivered to the tip of the solid portion of the tentacle pumping spinning element 60 by the tentacles 70 as described above. In addition, the tentacle pumping spinning element 60 is self-cleaning, low friction, and will not clog. There is nearly 200 G's of force generated at the surface of the tentacle pumping spinning element 60 preventing any buildup of material deposits. It is important to note the tentacle pumping spinning element 60 can generate cold liquid fog and dispense fluid without the bristles 66.

The portable liquid cold fogger 12 can also be connected to an external fluid container using the external fluid container link 88. The inner shroud 36 can also be shaped into a venturi, cone, or tapered, to optimize air flow. The motor 50 can also be mounted off center using gears or other mechanical mechanisms to allow for different routing of the tentacle pumping spinning element 60 tentacles 70 and tentacle feed tube 72. Fig. 2 shows an alternative embodiment of the present invention.

Since other modifications and changes varied to fit particular operating requirements and environments will be apparent to those skilled in the art, the invention is not considered limited to the example chosen for purposes of disclosure and covers all changes and modifications which do not constitute departures from the true spirit and scope of this invention.

Having thus described the invention, what is desired to be protected by Letters Patent is presented in the subsequently appended claims.

## Claims

1. A liquid cold fogger, comprising:
a. a main housing adapted to contain liquid therein;
b. a motor adapted to produce rotational motion;
c. a power source operably coupled to the motor;
d. a bundle of tentacles, each tentacle having first and second ends in fluid communication with the liquid;
e. a tentacle feed tube in which the bundle of tentacles is housed; and
f. a tentacle pumping spinning element operably connected to the motor for rotation about an axis, wherein the first ends of the tentacles are attached to the tentacle pumping spinning element.

2. The liquid cold fogger according to claim 1, further comprising a shroud composed of inner and outer shroud members that are movable relative to one another between first and second positions, wherein the tentacle pumping spinning element is positioned within the shroud when the inner and outer shroud members are in their first position and is positioned exteriorly of the shroud when the inner and outer shroud members are in their second position.

3. The liquid cold fogger according to claim 2, further comprising a spring detent operably extending between the inner shroud and the outer shroud and fixing the two in either of their first and second positions.

4. The liquid cold fogger according to claim 1, wherein the tentacle pumping spinning element comprises a bulbous body.

5. The liquid cold fogger according to claim 1, further comprising a plurality of bristles extending radially outwardly from the tentacle spinning element.

6. The liquid cold fogger according to claim 1, further comprising an air screw positioned adjacent the tentacle pumping spinning element and operably adapted to push air across the tentacle spinning element.

7. The liquid cold fogger according to claim 1, wherein the tentacle feed tube is a solid tube that attaches to the main housing via a feed tube connector that fluidly connects the tentacle feed tube to the main housing such that liquid in the housing can flow into the feed tube.

8. The liquid cold fogger according to claim 1, wherein the tentacle feed tube includes a plurality of apertures formed therethrough and the tentacle feed tube is positioned within the main housing, wherein the fluid in the main housing can flow into the feed tube through the apertures.

9. The liquid cold fogger according to claim 1, wherein at least some of the tentacles include bulbous protrusions formed thereon.

10. The liquid cold fogger according to claim 1, further comprising a power source housing compartment that includes a vent formed therein.

11. The liquid cold fogger according to claim 1, further comprising an insulated hollow wire network connected between the power source and the motor.

12. The liquid cold fogger according to claim 1, wherein each tentacle comprises a plurality of individually twisted wires.

13. The liquid cold fogger according to claim 1, wherein each tentacle is no less than 8 thousandths of an inch in diameter.

14. A method of dispensing a liquid fog from a liquid fogger having a main housing adapted to contain liquid therein; a motor adapted to produce rotational motion; a power source operably coupled to the motor; a bundle of tentacles, each tentacle having first and second ends in fluid communication with the liquid; a tentacle feed tube in which the bundle of tentacles is housed; and a tentacle pumping spinning element operably connected to the motor for rotation about an axis, wherein the first ends of the tentacles are attached to the tentacle pumping spinning element, the method comprising the step of:
providing power to the motor to cause the tentacle spinning element to rotate about an axis.

15. A method of dispensing a liquid fog from a liquid fogger having a main housing adapted to contain liquid therein; a motor adapted to produce rotational motion; a power source operably coupled to the motor; a bundle of tentacles, each tentacle having first and second ends in fluid communication with the liquid; a tentacle feed tube in which the bundle of tentacles is housed; and a tentacle pumping spinning element operably connected to the motor for rotation about an axis, wherein the first ends of the tentacles are attached to the tentacle pumping spinning element, the method comprising the step of:
a. filling the main housing 18 with a desired fluid;
b. locking a shroud in encasing relation around the tentacle spinning element; and
c. applying electrical power causing the tentacle pumping spinning element to rotate.
